# EUROPÄISCHE PATENTANMELDUNG

(11) **EP 3 932 572 A1**
(43) Veröffentlichungstag der Anmeldung: **05.01.2022**
(21) Anmeldenummer: 20183973.5
(22) Anmeldetag: 03.07.2020
(51) Int. Cl.: B08B 7/00

(54) **VERFAHREN ZUR BEHANDLUNG VON OBERFLÄCHEN**

(71) Anmelder: EWALD DÖRKEN AG, 58313 Herdecke (DE); SLCR Lasertechnik GMBH, 52353 Düren (DE)
(72) Erfinder: Minas, Hans-Jörg, 33104 Paderborn (DE); Rabe, Christian, 58640 Iserlohn (DE); Lenzmann, Christian, 58239 Schwerte (DE); Schulz-Gaus, Olav, 50126 Bergheim (DE); Kurze, Philipp, 52382 Niederzier (DE)
(74) Vertreter: Freiherr von Foullon, Alexander

(57) **Zusammenfassung**

Gegenstand der vorliegenden Erfindung sind ein Verfahren und eine Vorrichtung zur kollektiven Behandlung der Oberflächen einer Vielzahl von Objekten durch Bestrahlung mit Laserstrahlung.

## Beschreibung

Die vorliegende Erfindung betrifft das technische Gebiet der Oberflächenbehandlung, insbesondere der Änderung von Oberflächeneigenschaften oder der Reinigung von Oberflächen.

Insbesondere betrifft die vorliegende Erfindung ein Verfahren zur kollektiven Behandlung der Oberflächen einer Vielzahl von Objekten.

Weiterhin betrifft die vorliegende Erfindung eine Vorrichtung zur kollektiven Behandlung der Oberflächen einer Vielzahl von Objekten.

Schließlich betrifft die vorliegende Erfindung ein Verfahren zum Beschichten einer Vielzahl von Objekten.

Um eine gute und ausreichende Haftung von Beschichtungen auf einer Oberfläche zu ermöglichen, ist es notwendig, dass diese gut haftende Eigenschaften aufweist und nicht etwa die Haftung durch anhaftende Verschmutzungen in begrenzten Bereichen oder sogar großflächig verschlechtert wird.

Darüber hinaus ist es insbesondere für industrielle Beschichtungsvorgänge unerlässlich, dass die zu beschichtende Oberfläche überall vergleichbare und geradezu homogene Eigenschaften aufweist, damit eine gleichmäßige Beschichtung, sowohl eines einzelnen Gegenstandes als auch einer Vielzahl von Gegenständen ermöglicht wird. Dies ist besonders von großem Interesse bei funktionellen Beschichtungen, wie beispielsweise Korrosionsschutzbeschichtungen, insbesondere Zinklammellenbeschichtungen oder galvanisch abgeschiedene Zink- oder Zinklegierungsschichten, oder auch dekorativen Beschichtungen. In allen Fällen ist eine ausreichende und gleichbleibende Haftung der Beschichtung an der Oberfläche des beschichteten Objekts mit gleichmäßiger und definierter Schichtdicke notwendig, um die einwandfreie Funktionen, insbesondere Korrosionsschutzeigenschaften, oder auch einen gewünschten hochwertigen optischen und haptischen Eindruck zu gewährleisten.

Um insbesondere in industriellen Abläufen stets gleiche Oberflächeneigenschaften von zu beschichtenden Objekten bzw. Gegenständen zu erhalten, werden die Gegenstände vor der eigentlichen Beschichtung mit physikalischen oder chemischen Mitteln gereinigt bzw. vorbehandelt. Im Fall metallischer Objekte bzw. Gegenstände wird dabei im Allgemeinen eine Kombination aus nasschemischer Reinigung und physikalischer, insbesondere mechanischer, Reinigung angewandt. Bei der nasschemischen Reinigung handelt es sich insbesondere um heißalkalisches Entfetten oder Beizen oder auch ein Entfetten mittels Tauchen in ein Lösemittelbad. Mechanisch wird in der Regel durch Strahlen gereinigt, indem entweder Edelstahlkugeln oder Teilchen aus keramischen oder mineralischen Materialien mit hoher Geschwindigkeit auf die zu reinigende Oberfläche geschossen werden, oder durch Schleifen. Darüber hinaus wird oftmals ergänzend die metallische Oberfläche phosphatiert, um eine Phosphatierungsschicht als Haftvermittler zu erhalten und die Haftung nachfolgend aufgebrachter Beschichtungen auf der Metalloberfläche nochmals zu verstärken. Weiterhin werden auch Konversionsschichten, wie beispielsweise Oxsilan, auf die Oberflächen aufgebracht, um zufriedenstellende Oberflächeneigenschaften zu erzielen.

Durch die Reinigung bzw. Vorbehandlung werden unerwünschte Anhaftungen auf der Oberfläche von metallischen bzw. metallhaltigen oder allgemein Objekten bzw. Gegenständen, insbesondere Rost, Korrosionsprodukte, Fett oder andere Produktionsrückstände entfernt und gegebenenfalls. auch angeraut, um für eine gleichmäßige Beschichtung geeignete reproduzierbare Oberflächeneigenschaften zu erhalten.

Für größere, vereinzelte Bauteile kann dabei die Vorbehandlung auch mittels Laserbestrahlung erfolgen. Eine derartige Laserreinigung wird jedoch in der Regel nur zur punktuellen Reinigung spezifischer Bauteile, wie beispielsweise zur Entfernung von Verzunderungsrückständen im Bereich von Schweißnähten, bei der gezielten Lackier- und Klebevorbereitung großer Kfz-Komponenten, z.B. Batteriekühler von E-Autos, oder bei der gezielten Reifeninnenreinigung verwendet. In jedem Falle erfolgt mit dem Laser aber eine gezielte Bearbeitung mit exakter Konturführung definierter Oberflächenbereiche.

Kleinere Teile, sogenanntes Massenschüttgut, bei welchen die gezielte bzw. exakte Reinigung und Beschichtung einzelner Teile wirtschaftlich unrentabel bzw. unpraktikabel ist, werden hingegen mit den zuvor beschriebenen nasschemischen Methoden oder mittels Strahlen gereinigt bzw. vorbehandelt. Hierzu müssten jedoch nicht nur die geeigneten Materialien, nämlich Strahlmittel oder Chemikalien bereitgehalten werden, welche Kosten in der Anschaffung und Lagerung verursachen, sondern auch die verbrauchten Reinigungsmittel müssen wieder aufwendig entsorgt oder gereinigt werden.

Darüber hinaus ist die Verwendung brennbarer bzw. ätzender und gesundheitsschädlicher Chemikalien aus Gründen des Umweltschutzes und der Arbeitssicherheit ungünstig und zu minimieren.

Üblicherweise ist es insbesondere bei der Behandlung von Massenschüttgut notwendig, die Teile zum einen nasschemisch zu reinigen und zu entfetten, insbesondere durch heißalkalische Behandlungen oder den Einsatz von Lösemitteln, und zum anderen anhaftende Verschmutzungen, insbesondere Korrosionsprodukte, wie beispielsweise Rost oder Zunder, mittels Strahlen zu entfernen.

Nur durch die Kombination beider Vorbehandlungs- bzw. Reinigungsschritte können oftmals gleichmäßige und gleichbleibende Oberflächeneigenschaften des Massenschüttguts gewährleistet und im industriellen Maßstab stets gleichbleibende Beschichtungen erzielt werden.

Die zuvor am Beispiel metallischer Massenschüttgüter aufgezeigten Problematiken gelten jedoch generell für die Oberflächenbehandlung von Massenschüttgut. Eine individuelle Behandlung einzelner Objekte ist aus Kosten- und Zeitgründen nicht möglich und bei der kollektiven Behandlung der Oberflächen, sei es nun zur Reinigung oder auch zur Änderung der Oberflächeneigenschaften, beispielsweise durch Aufrauen oder Härten, müssen in der Regel chemische oder physikalische Oberflächenbehandlungsmittel in großen Überschuss eingesetzt werden, welche anschließend aufwendig zurückgewonnen oder kostenintensiv entsorgt werden müssen.

Es fehlt im Stand der Technik folglich weiterhin an einem einfachen reproduzierbaren Verfahren, welches es ermöglicht, die Oberflächen von Massenschüttgut, insbesondere Kleinteilen, einfach zu behandeln und die Oberflächeneigenschaften gezielt einzustellen. Insbesondere gibt es keine zufriedenstellenden Verfahren, welche es ermöglichen, die Oberflächeneigenschaften von Massenschüttgut gezielt zu verändern, beispielsweise Oberflächen gezielt zu härten oder aufzurauen, oder verschiedene Oberflächenbehandlungen in einem einheitlichen Verfahren durchzuführen.

Insbesondere fehlt es im Stand der Technik an einem Verfahren, dass es erlaubt, die Oberflächen von Massenschüttgut, insbesondere Kleinteilen, derart zu reinigen und vorzubehandeln, dass eine nachfolgende Beschichtung im industriellen Maßstab möglich ist, und dies nach Möglichkeit in einem einzigen Verfahrensschritt der Reinigung.

Gleichermaßen fehlt es bislang auch an einem Verfahren zur Reinigung bzw. Vorbehandlung von Massenschüttgut, insbesondere Kleinteilen, welches ohne Einsatz von Gefahrstoffen und ohne den ressourcenaufzehrenden Einsatz von Verbrauchsmitteln auskommt.

Eine Aufgabe der vorliegenden Erfindung ist somit darin zu sehen, die Nachteile der im Stand der Technik genannten Verfahren zur Oberflächenbehandlung von Massenschüttgut, insbesondere Kleinteilen, zu vermeiden, zumindest jedoch abzuschwächen.

Eine Aufgabe der vorliegenden Erfindung liegt weiterhin darin, ein einfaches und reproduzierbares Verfahren zur Oberflächenbehandlung von Massenschüttgut, insbesondere Kleinteilen, zur Verfügung zu stellen, mit welchem vorzugsweise einfach und flexibel eine Vielzahl unterschiedlicher Oberflächenbehandlungen durchgeführt werden können.

Insbesondere ist eine Aufgabe der vorliegenden Erfindung, die im Stand der Technik genannten Nachteile der bekannten Reinigungsverfahren zu vermeiden, zumindest jedoch abzuschwächen.

Insbesondere ist eine Aufgabe der vorliegenden Erfindung darin zu sehen, ein einfaches und reproduzierbares Verfahren zur Reinigung bzw. Vorbehandlung von Massenschüttgut bereitzustellen, welches den Erhalt beschichtungsfähiger Oberflächen in einem einzigen Verfahrensschritt ermöglicht.

Eine weitere Aufgabe der vorliegenden Erfindung ist darin zu sehen, ein Verfahren bereitzustellen, welches ohne den Einsatz von Gefahrstoffen und ohne aufwendige Entsorgung verbrauchter Reinigungsmittel auskommt.

Gegenstand der vorliegenden Erfindung ist ein Verfahren zur kollektiven Behandlung der Oberflächen einer Vielzahl von Objekten nach Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung - gemäß einem zweiten Aspekt der vorliegenden Erfindung - ist eine Vorrichtung nach Anspruch 15; weitere, vorteilhafte Ausgestaltungen dieses Erfindungsaspekts sind Gegenstand der diesbezüglichen Unteransprüche.

Schließlich ist weiterer Gegenstand der vorliegenden Erfindung - gemäß einem dritten Aspekt der vorliegenden Erfindung - ein Verfahren zur Beschichtung einer Vielzahl von Objekten mit nach Anspruch 19; weitere, vorteilhafte Ausgestaltungen dieses Erfindungsaspekts sind Gegenstand des diesbezüglichen Unteranspruchs.

Es versteht sich von selbst, dass Besonderheiten, Merkmale, Ausgestaltungen und Ausführungsformen sowie Vorteile oder dergleichen, welche nachfolgend - zu Zwecken der Vermeidung unnötiger Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin gilt, dass alle im Folgenden genannten Werte- bzw. Parameterangaben oder dergleichen grundsätzlich genormt bzw. standardisiert oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Verfahren zur kollektiven Behandlung der Oberflächen einer Vielzahl von Objekten, wobei die Behandlung der Oberflächen durch Bestrahlung mit Laserstrahlung erfolgt.

Denn, wie die Anmelderin überraschender Weise herausgefunden hat, lassen sich durch die Laserbestrahlung an Massenschüttgut nahezu beliebige Oberflächenbehandlungen von Massenschüttgut durchführen. Insbesondere ist es möglich, die Oberflächen von Massenschüttgut, insbesondere Kleinteilen, kollektiv, d.h. in einem chaotischen Prozess zu reinigen. Durch Lagerveränderung des Schüttguts während der Oberflächenbehandlung, kann erreicht werden, dass alle Oberflächen statistisch in einem Maße bestrahlt werden, dass stets die gewünschten Oberflächeneigenschaften erzielt werden.

Das erfindungsgemäße Verfahren erlaubt dabei insbesondere die Behandlung oder Vorbehandlung von Oberflächen aus nahezu beliebigen Materialien, wie beispielsweise aus Metall, Kunststoff, Holz, Keramik etc. Durch geeignete Wahl der Laserenergie sowie der Wellenlänge können unterschiedliche Oberflächenbehandlungen durchgeführt werden, wie beispielsweise Entfernung von Verunreinigungen, insbesondere anorganischen und organischen Rückständen, von der Oberfläche, das gezielte Aufrauen der Oberflächen oder auch eine Härtung der Oberflächen. Besonders vorteilhaft ist, dass im Rahmen der vorliegenden Erfindung die unterschiedlichen Oberflächenbehandlungen parallel, d.h. gleichzeitig, unmittelbar aufeinanderfolgend in einer Vorrichtung durchgeführt werden können.

Insbesondere durch Einsatz verschiedener Laser, entweder gleichzeitig oder aufeinanderfolgend, können unterschiedliche Oberflächenbehandlungsschritte simultan oder zumindest in einem Verfahren durchgeführt werden. So können beispielsweise mit CO₂-Lasern besonders gut organische Verunreinigungen von Oberflächen entfernt werden, während mit Faserlasern anorganische Verunreinigungen entfernt oder Oberflächen beispielsweise gezielt aufgeraut werden können.

Bei dem erfindungsgemäßen Verfahren handelt es sich somit allgemein um ein Verfahren zur Erzielung einer gleichmäßig behandelten oder gleichmäßig veränderten Oberfläche des Massenschüttguts, insbesondere der Kleinteile. Vorzugsweise lassen sich Kleinteile kollektiv, insbesondere in Form von Massenschüttgut, einfach und kostengünstig behandeln, insbesondere vorbehandeln und reinigen, indem die Kleinteile bzw. das Massenschüttgut kollektiv, d.h. nicht einzeln, sondern vielmehr in Schüttung, mittels Laserstrahlen behandelt werden bzw. wird. Derartige Laserreinigungsverfahren wurden bislang lediglich bei Einzelteilen bzw. vereinzelten Teilen durchgeführt und nicht in chaotischen Systemen, wie Massenschüttgut.

Vorzugsweise ist es im Rahmen der vorliegenden Erfindung auch vorgesehen, dass die Behandlung der Oberflächen ausgewählt wird aus Reinigen und/oder Modifizieren der Oberfläche. Bei der Modifizierung der Oberfläche handelt es sich insbesondere um Einstellen der Rauheit, insbesondere Glätten oder Aufrauen, Abrunden, Entfernung von Graten oder die Härtung. Unter einer Modifizierung der Oberfläche ist dabei vorzugsweise eine Änderung der Oberflächeneigenschaften zu verstehen.

Wenn das erfindungsgemäße Verfahren als Oberflächenbehandlung zur Einstellung der Rauheit durchgeführt wird, so ist es im Rahmen der vorliegenden Erfindung üblicherweise vorgesehen, dass ein Rₐ-Wert nach Din 4287 von < 50µm, vorzugsweise < 20µm, eingestellt wird. Gleichermaßen kann es im Rahmen der vorliegenden Erfindung vorgesehen sein, dass ein Rₐ-Wert im Bereich von 1 bis 50µm, vorzugsweise 1 bis 20µm, nach DIN 4287 eingestellt wird.

Im Folgenden sind viele Aspekte und Vorteile der Erfindung anhand der Vorbehandlung bzw. Reinigung und anschließenden Beschichtung von metallischem oder metallhaltigem Massenschüttgut beispielhaft erläutert, gelten aber auch entsprechend für andere Oberflächenbehandlungen, da diese verfahrensgleich mit jeweils angepassten, leicht unterschiedlichen Bearbeitungsparameter durchgeführt werden können. Insbesondere metallisches oder metallhaltiges Schüttgut und Schüttgut aus Holz können mit sehr ähnlichen Verfahrensparametern bearbeitet werden.

Das erfindungsgemäße Verfahren ermöglicht beispielsweise die üblicherweise durchgeführte zweistufige Vorbehandlung bzw. Reinigung von Massenschüttgut aus metallischen oder metallhaltigen Objekten in Form von insbesondere heißalkalischem Entfetten und anschließendem Strahlen zur Entfernung von Korrosionsrückständen durch ein einstufiges Verfahrens zu ersetzen, nämlich die Bestrahlung mit Laserstrahlung, bzw. den Umfang dieser Verfahrensschritte einzudämmen.

Das erfindungsgemäße Verfahren zeichnet sich insbesondere dadurch aus, dass keine Gefahrstoffe, wie beispielsweise organische Lösemittel oder Säuren/Laugen verwendet werden müssen und darüber hinaus auch keine Verbrauchsmaterialien, wie beispielsweise Edelstahlperlen oder keramisches oder mineralisches Granulat benötigt wird, welches entweder aufwendig entsorgt oder gereinigt werden muss. Zudem können wässrige Reinigungsmittel oder feste Stoffe (Strahlmittel) in die Bauteile oder in Poren und Lunker eindringen, aus denen sie dann nur schwer wieder zu entfernen sind.

Eine Besonderheit des erfindungsgemäßen Verfahrens ist weiterhin darin zu sehen, dass die Verfahrensdauern deutlich reduziert werden können, da die Laserreinigung üblicherweise nicht länger dauern muss als die Behandlung von Massenschüttgut in einer Strahlanlage, d.h. die Prozessdauer für die Durchführung einer Entfettung kann in diesem Fall vollständig eingespart werden.

Das erfindungsgemäße Verfahren hat sowohl gegenüber der nasschemischen Vorbehandlung als auch der mechanischen Vorbehandlung deutliche Vorteile: So entfällt der Umgang mit Gefahrstoffen und auch eine aufwändige Abwasserbehandlung ist nicht notwendig. Darüber hinaus entfallen die Kosten für das Strahlmittel sowie die Entsorgung der Strahlstaubreste.

Das erfindungsgemäße Verfahren ist somit im Vergleich zu den üblichen, insbesondere zweistufigen Vorbehandlungs- oder Reinigungsverfahren, zur Behandlung von Massenschüttgut deutlich wirtschaftlicher und ressourcenschonender, d.h. nachhaltiger, durchzuführen.

Unter einer kollektiven Behandlung bzw. Oberflächenbehandlung ist im Rahmen der vorliegenden Erfindung insbesondere zur verstehen, dass die zu behandelnden Teile bzw. Objekte nicht einzeln, sondern gemeinsam und nicht räumlich voneinander getrennt, sondern insbesondere auch in loser Schüttung, vorbehandelt bzw. gereinigt werden. Die Oberflächenbehandlung findet somit vorzugsweise unter chaotischen Bedingungen statt.

Es ist erstaunlich, dass durch die Behandlung, insbesondere Reinigung, von Massenschüttgut mit Laserstrahlung vergleichbare Ergebnisse erzielt werden, wie beim Einsatz von Strahlmitteln, wobei im Vergleich zum Strahlen auf eine vorangehende Entfettung der zu behandelnden Teile oftmals vollständig verzichtet werden kann. Überraschenderweise hat sich dabei herausgestellt, dass die Teile auch außerhalb des Fokus der Laserstrahlung gereinigt werden. Es war nicht vorherzusehen, dass trotz der geringen Flächenleistung des Lasers die Bauteile auch außerhalb des Fokus der Laserstrahlung gereinigt werden und sich so beschichtungsfähige Oberflächen erhalten lassen, die den gleichen Anforderungen genügen, wie die üblichen Vorbehandlungs- und Reinigungsverfahren des Standes der Technik.

Gemäß einer bevorzugten Ausführungsform der vorliegenden Erfindung ist es vorgesehen, dass die Objekte in Schüttung, insbesondere in loser Schüttung vorliegen, vorzugsweise in Form einer mehrlagigen Schüttung. Bei Durchmischung einer derartigen Schüttung insbesondere losen oder auch mehrlagigen Schüttung von Massenschüttgut kann erstaunlicherweise gewährleistet werden, dass statistisch alle Oberflächen der einzelnen Teile in ausreichendem Maße behandelt, beispielsweise gereinigt, werden, um gleichmäßige Oberflächeneigenschaften zu gewährleisten und beispielsweise gut haftende und funktionelle Beschichtungen zu ermöglichen. Die Wellenlänge und Energie der Laserstrahlung sowie die Behandlungsdauer müssen jeweils auf das zu bearbeitende Material und die Art der Oberflächenbehandlung, wie beispielsweise Reinigen, Aufrauen etc. angepasst werden. Für die Oberflächenbehandlung ist es im Allgemeinen nicht notwendig, dass sämtliche Objekte zumindest zeitweise im Fokus der Laserstrahlung liegen, vielmehr werden offenbar auch angrenzende Bereiche in ausreichendem Maße bestrahlt.

Gemäß einer bevorzugten Ausführungsform der vorliegenden Erfindung ist es vorgesehen, dass die Objekte als Schüttgut, insbesondere Massenschüttgut, vorliegen.

Das Material der Objekte, insbesondere des Massenschüttguts, vorzugsweise der Kleinteile, kann im Rahmen der vorliegenden Erfindung üblicherweise aus nahezu beliebigen Materialien ausgewählt sein. Üblicherweise weisen die Objekte jedoch ein Material ausgewählt aus Holz, Kunststoff, Keramik, Metall und deren Mischungen auf oder bestehen hieraus. Vorzugsweise bestehen die Objekte aus einem Material ausgewählt aus Holz, Kunststoff, Keramik, oder Metall und deren Mischungen. Ganz besonders bevorzugt handelt es sich bei den Objekten um metallische oder metallhaltige Objekte.

Was nun das Material der metallischen oder metallhaltigen Objekte anbelangt, so kann dies aus einer Vielzahl von Metallen ausgewählt werden. Üblicherweise ist jedoch vorgesehen, dass das Material der metallischen oder metallhaltigen Objekte ausgewählt ist aus aluminium-, kupfer- und eisenhaltigen Materialien sowie deren Mischungen und Legierungen, insbesondere Eisenlegierungen und Aluminiumlegierungen, vorzugsweise Stahl- bzw. Stahllegierungen. Aluminium und Aluminiumlegierungen und im besonderem Maße Stahllegierungen werden üblicherweise mittels Entfetten und anschließender mechanischer Strahlprozesse für weitere Beschichtungsvorgänge vorbereitet. Weitere metallische Werkstoffe wie z.B. Kupfer und seine Legierungen können als Massenschüttgut mittels Laserstrahlung oberflächenbehandelt werden.

Nicht-metallische Objekte im Allgemeinen können als Massenschüttgut mittels Laserstrahlung in vergleichbarer Weise oberflächenbehandelt werden. Lediglich die Wellenlänge des Lasers und die Laserleistung müssen nach dem verwendeten Material und der durchzuführenden Behandlung ausgewählt werden.

Im Rahmen der vorliegenden Erfindung kann es vorgesehen sein, dass die Objekte ausgewählt sind aus Kleinteilen, insbesondere Schrauben, Muttern, Bolzen und Nieten, Stanzteilen, insbesondere Stanz-Biegeteilen, Gussteilen und Pressteilen. Die Objekte sind insbesondere Massenschüttgut, welches allein schon aus Gründen der Wirtschaftlichkeit und der Handhabbarkeit der möglicherweise kleinen Teile kollektiv vorbehandelt bzw. gereinigt und beschichtet wird, d.h. es wird nicht jedes einzelne Teil separat behandelt. Neben Kleinteilen für die industrielle Produktion können auch beliebige andere Kleinteile, wie kleine Nutzgegenstände z.B. Schlüsselanhänger, Deckel, etc. oder Dekoartikel, mit dem erfindungsgemäßen Verfahren bearbeitet werden.

Besonders gute Ergebnisse werden im Rahmen der vorliegenden Erfindung erhalten, wenn die Lage der einzelnen Objekte während der Behandlung zueinander verändert wird. Insbesondere hat sich bewährt, wenn die Objekte während der Behandlung durchmischt werden. Durch eine Durchmischung wird erreicht, dass der Laserstrahl oder die Laserstrahlen stets andere bzw. wechselnde Oberflächen oder andere Stellen bzw. wechselnde Stellen der Oberflächen der einzelnen Teile trifft bzw. treffen.

Durch die Durchmischung bzw. Umwälzung der Objekte wird insbesondere gewährleistet, dass ständig andere bzw. wechselnde Oberflächen der Objekte in den Wirkungsbereich des Lasers gelangen. In diesem Zusammenhang scheint es insbesondere so zu sein, dass auch außerhalb des Bereichs des eigentlichen Laserfokus eine Behandlung, insbesondere Reinigung, der Oberflächen der Objekte, insbesondere metallhaltigen bzw. metallischen Objekte, stattfindet.

Besonders gute Ergebnisse werden in diesem Zusammenhang erhalten, wenn die Lage der Objekte kontinuierlich und/oder andauernd verändert wird. Gleichfalls kann es vorgesehen sein, dass die Objekte kontinuierlich und/oder andauernd durchmischt werden.

Die Durchmischung kann dabei vorzugsweise auch während der Bestrahlung mit dem Laserstrahl ständig durchmischt werden und somit stets neue Oberflächen bzw. Teile der Oberflächen der zu reinigenden Teile dem Laserstrahl ausgesetzt werden.

Üblicherweise werden im Rahmen der vorliegenden Erfindung die Objekte mittels einer Durchmischungseinrichtung durchmischt. Besonders gute Ergebnisse werden dabei erhalten, wenn die Durchmischungseinrichtung ausgewählt ist aus Schnecken, insbesondere Förderschnecken, Raupenbändern, Muldenbändern, Schwenktrommeln oder Drehtrommeln. Es können somit gleiche Einrichtungen wie auch bei Strahlanlagen zum Einsatz kommen.

Darüber hinaus ist es möglich, dass die Behandlung, insbesondere Vorbehandlung bzw. Reinigung, kontinuierlich oder diskontinuierlich, insbesondere im Batch-Betrieb, durchgeführt wird. Kontinuierliche Verfahren arbeiten beispielsweise mit Schnecken oder Raupenbändern, während diskontinuierliche Verfahren, nämlich insbesondere Batch-Verfahren, mit Muldenbändern, Schwenktrommeln oder Drehtrommeln arbeiten.

Im Allgemeinen ist es im Rahmen der vorliegenden Erfindung vorgesehen, dass bei der Reinigung Verschmutzungen, insbesondere Anhaftungen, von der Oberfläche der Objekte, insbesondere der der metallischen oder metallhaltigen Objekte, entfernt werden.

Üblicherweise bestehen die Verschmutzungen aus anorganischen Anhaftungen, vorzugsweise Korrosionsprodukten, insbesondere Zunder und Rost, organischen Anhaftungen, insbesondere Ölen und Fetten, oder deren Mischungen. Bei den Anhaftungen bzw. Verschmutzungen handelt es sich insbesondere um Produktionsrückstände, wie beispielsweise Verzunderungen oder Rückstände von Härtesalzen, oder auch Fette und Öle, welche zu Zwecken des Korrosionsschutzes aufgetragen werden.

Wenn das erfindungsgemäße Verfahren als Verfahren zur Vorbehandlung bzw. Reinigung durchgeführt wird, werden die Oberflächen der Objekte, insbesondere der metallischen bzw. metallhaltigen Objekte, zumindest technisch gereinigt, so dass eine gleichmäßige und stabile haftende Beschichtung gewährleistet wird. Die mit der erfindungsgemäßen Vorbehandlung bzw. Reinigung erhaltenen Oberflächen erfüllen für nachfolgende Beschichtungen insbesondere die gängigen technischen Spezifikationen der Automobilhersteller.

Im Rahmen der vorliegenden Erfindung werden besonders gute Ergebnisse erhalten, wenn die Bestrahlung mittels Laserstrahlung zumindest bereichsweise, vorzugsweise bereichsweise, erfolgt. Es ist im Rahmen der vorliegenden Erfindung üblicherweise nicht notwendig, mit dem Laser stets sämtliche Oberflächen der Objekte vollständig zu bestrahlen. Vielmehr reicht es aus, wenn Bereiche bzw. Wegstrecken auf der Oberfläche des Schüttguts mittels Laserstrahlung gereinigt werden. Bei ausreichender Durchmischung werden sämtliche Oberflächen in kurzer Zeit gereinigt.

Gemäß einer bevorzugten Ausführungsform der vorliegenden Erfindung wird das erfindungsgemäße Verfahren derart durchgeführt, dass
(a) in einem ersten Verfahrensschritt (a) eine Vielzahl von Objekten in eine Durchmischungseinrichtung eingebracht wird und
(b) in einem auf den ersten Verfahrensschritt (a) folgenden zweiten Verfahrensschritt (b) die Vielzahl von Objekten Objekte durchmischt und mit Laserstrahlung bestrahlt wird.

Für diese bevorzugt und spezielle Ausführungsform gelten alle Merkmale, Besonderheiten, Vorteile, die zuvor im Zusammenhang mit dem allgemeinen Verfahren beschrieben wurden entsprechend.

Unter einer Vielzahl ist im Rahmen der vorliegenden Erfindung eine Menge n der Teile ≥ 10, vorzugsweise ≥ 100, vorzugsweise ≥ 500, vorzugsweise ≥ 1.000, besonders bevorzugt ≥ 10.000 zu verstehen.

Eine genaue Anzahl der Teile richtet sich stets nach den Möglichkeiten und Abmessungen der verwendeten Vorrichtungen.

Darüber hinaus kann es im Rahmen der vorliegenden Erfindung vorgesehen sein, dass die Bestrahlung mittels Laserstrahlung kontinuierlich oder diskontinuierlich bzw. gepulst, vorzugsweise gepulst, erfolgt. Unter einer kontinuierlichen Bestrahlung mittels Laserstrahlung ist dabei die Verwendung eines kontinuierlichen Lasers (cw-Laser, Continuous Wave Laser) zu verstehen. Unter einer diskontinuierlichen Bestrahlung mit Laserstrahlung ist insbesondere die Verwendung eines gepulsten Lasers zu verstehen, welcher mit hoher Frequenz (auch PRR Pulse oder Repetition Rate genannt) Laserstrahlen bzw. Laserimpulse emittiert.

Üblicherweise ist es im Rahmen der vorliegenden Erfindung vorgesehen, dass für die Bestrahlung mit Laserstrahlung ein Laser oder mehrere Laser verwendet werden. Weiterhin ist es möglich, dass jeder Laser einen oder mehrere Laserköpfe - auch Arbeitsköpfe - aufweist. Im Rahmen der vorliegenden Erfindung kann es daher vorgesehen sein, dass für die Bestrahlung mit Laserstrahlung ein Laser oder mehrere Laser und/oder ein Laserkopf oder mehrere Laserköpfe verwendet werden. Vorzugsweise werden im Rahmen der vorliegenden Erfindung für die Bearbeitung der Objekte mehrere Laser oder Laserköpfe verwendet. Auf diese Weise kann das Bearbeitungsergebnis verbessert oder die Effizienz bzw. der Durchsatz erhöht werden.

Gleichermaßen kann es vorgesehen sein, dass die Laser und/oder Laserköpfe in einer oder mehreren, insbesondere zueinander parallelen, Ebenen in der Vorrichtung angeordnet sind. Weiterhin können die Laser und/oder Laserköpfe in den einzelnen Ebenen parallel und/oder zueinander versetzt, insbesondere gestaffelt, angeordnet sein. Hierbei können sowohl kontinuierliche als auch diskontinuierliche arbeitende Laserstrahlungssysteme Verwendung finden.

Darüber hinaus ist es gleichfalls möglich, dass die Bestrahlung der Objekte mit Laserstrahlung mit den mehreren Lasern und/oder mehreren Laserköpfen im Rahmen des erfindungsgemäßen Verfahrens parallel oder aus unterschiedlichen Winkeln erfolgt, d.h. dass die Strahlung aus den Laser bzw. Laserköpfe parallel oder aus unterschiedlichen Winkeln auf die Objekte einwirkt.

Des Weiteren können auch Laser mit unterschiedlichen Wellenlängen zum Einsatz kommen, wie beispielsweise Faserlaser, Nd:YAG-Laser, Diodenlaser, CO₂-Laser etc. Dies führt unter anderem zu einer Erweiterung des Anwendungsspektrums, insbesondere des Reinigungsspektrums.

Was nun den Wellenlängenbereich anbelangt, in welchem die erfindungsgemäß verwendete Laserstrahlung liegt, so kann diese in weiten Bereichen variieren. Üblicherweise besitzt die erfindungsgemäß eingesetzt Laserstrahlung jedoch eine Wellenlänge im Bereich von 100 bis 15.000 nm, insbesondere 300 bis 12.000 nm, vorzugsweise 400 bis 12.000 nm. Der jeweils eingesetzte Wellenlängenbereich ist von dem zu bearbeitenden Material abhängig.

So ist beispielsweise die Verwendung von Faserlasern, Neodym-YAG-Lasern sowie Diodenlaser, insbesondere geeignet, anorganische Verunreinigungen zu entfernen, während mit CO₂-Lasern vorzugsweise organische Rückstände entfernt werden können. Weiterhin ist es auch möglich, durch die Verwendung unterschiedlicher Lasertypen nicht nur einen einziges Oberflächenbehandlungsverfahren durchzuführen, sondern simultan oder unmittelbar aufeinanderfolgend in einem Verfahren mehrere Schritte, wie beispielsweise ein Reinigen und gezielten Einstellen der Oberflächenrauheit etc.

Aber auch andere Lasertypen, wie z.B. UKP-Laser, oder auch mit anderen Wellenlängen können je nach Material und Materialeigenschaft sehr gute Ergebnisse erzielen.

Wie zuvor dargelegt, ist es möglich, dass im Rahmen der vorliegenden Erfindung ein Laser oder mehrere Laser und/oder mehrere Laserköpfe eingesetzt werden. Durch die Verwendung mehrerer Laser bzw. mehrerer Laserköpfe wird es möglich, die Verfahrensdauer zu reduzieren bzw. durch Einsatz mehrerer Laser mit unterschiedlichen Wellenlängen mehrere Oberflächenbehandlungsschritte in einem Verfahren durchzuführen.

Im Rahmen der vorliegenden Erfindung kann es gleichermaßen vorgesehen sein, dass am Ort der Oberflächenbehandlung, insbesondere der Laserbehandlung, entstehende Partikel aus der Gasphase entfernt, insbesondere abgesaugt, werden. Die Entfernung der Partikel aus der Gasphase kann entweder direkt am Ort der Laserbehandlung oder Allgemein in der erfindungsgemäß eingesetzten Vorrichtung erfolgen.

Darüber hinaus kann es gleichermaßen vorgesehen sein, dass das Verfahren in einer Prozessatmosphäre durchgeführt wird, insbesondere einer Inertgasatmosphäre, vorzugsweise einer Argon- oder Stickstoffatmosphäre. Gleichermaßen ist es möglich, dass am Ort der Laserbehandlung direkt oder indirekt mit einem Prozessgas und/oder Druckluft gespült wird.

Weiterhin ist es im Rahmen der vorliegenden Erfindung üblicherweise vorgesehen, dass das Verfahren, insbesondere die Laserbehandlung sensorisch überwacht und gesteuert wird, beispielsweise durch optische Systeme oder vorzugsweise durch akustische Systeme.

Gemäß einer bevorzugten Ausführungsform der Erfindung ist es vorgesehen, dass das Verfahren mit weiteren Verfahren zur Oberflächenbehandlung kombiniert wird, insbesondere einer Plasmabestrahlung oder einer Trockeneisbestrahlung.

Falls das erfindungsgemäße Verfahren mit einem weiteren Verfahren zur Oberflächenbehandlung kombiniert wird, so können das erfindungsgemäße Verfahren sowie das weitere Oberflächenbehandlungsverfahren entweder parallel, d.h. gleichzeitig, oder sequenziell, d.h. nacheinander oder durchgeführt werden. Gemäß einer besonders bevorzugten Ausführungsform der vorliegenden Erfindung ist es vorgesehen, dass das erfindungsgemäße Verfahren und das weitere Verfahren zur Oberflächenbehandlung alternierend durchgeführt werden, d.h. das zunächst das erfindungsgemäße Verfahren durchgeführt wird, anschließend eine weitere Oberflächenbehandlung, wie beispielsweise eine Plasmabehandlung oder Trockeneisbestrahlung, und anschließend das erfindungsgemäße Verfahren wieder durchgeführt wird. Dieses Procedere kann mehrere Zyklen durchgeführt werden, bis die gewünschten Oberflächeneigenschaften eingestellt sind.

Im Rahmen der vorliegenden Erfindung ist es üblicherweise vorgesehen, dass die Laserleistung im Bereich von 100 bis 100.000 W, insbesondere 100 bis 10.000 W, vorzugsweise 200 bis 5.000 W, liegt. Es hat sich im Rahmen der vorliegenden Erfindung gezeigt, dass oftmals mit geringen Laserenergien in kurzer Zeit eine ausreichende Vorbehandlung bzw. Reinigung der Oberflächen erzielt werden kann, selbst wenn sich die Oberflächen der Kleinteile nicht im unmittelbaren Fokus des Laserstrahls befinden. Um die Durchlaufleistung zu erhöhen können aber auch höhere Laserleitungen genutzt werden.

Besonders gute Ergebnisse werden im Rahmen der vorliegenden Erfindung erhalten, wenn die Laserstrahlung einen Fokusbereich von 0,2 bis 25 mm, insbesondere 0,5 bis 20 mm, vorzugsweise 1,0 bis 10 mm, aufweist. Laserstrahlen mit einem derart großen Fokus können selbst bei Anwendung der zuvor genannten geringen Energien sehr gute Reinigungsergebnisse erzielt werden. Laser mit noch größeren Fokusbereichen von mehr als 25mm oder kleineren Fokusbereichen von 0,01 mm bis 0,2 mm können ebenfalls für einige Anwendungen verwendet werden.

Wie zuvor dargelegt, wird die Laserstrahlung vorzugsweise derart eingesetzt, dass stets nur ein Teil der Oberflächen bestrahlt wird. Besonders gute Ergebnisse werden in diesem Zusammenhang erhalten, wenn die Laserstrahlung mit einer Geschwindigkeit von 0 bis 50.000 mm/s, insbesondere 2.000 bis 10.000 mm/s, vorzugsweise 2.500 bis 5.000 mm/s über die Objekte geführt wird. Üblicherweise wird der Laserstrahl über die Objekte bewegt, es kann aber auch eine Bearbeitung mit aufgeweitetem nicht bewegten Strahl erfolgen.

Weiterhin können im Rahmen der Erfindung verschiedene Scanstrategien, insbesondere eindimensionale (1D) Scanverfahren, wie beispielsweise einfaches Bewegen des Lasers zwischen zwei Punkten, oder zweidimensionale (2D) Scanverfahren, wie beispielsweise Wobbeln oder zickzack, zum Einsatz kommen.

Darüber hinaus könne verschiedene Strahlführungssysteme und Strahlablenkungssysteme, insbesondere Transmissions- und Reflektionsoptiken, wie Faser- bzw. Glasoptiken oder Spiegeloptiken, Verwendung finden. Mit den Optiken können entsprechende Prozessgrößen wie Strahldurchmesser, Rayleighlänge, Scangeschwindigkeiten beeinflusst werden.

Besonders gute Ergebnisse werden im Rahmen der vorliegenden Erfindung erhalten, wenn die Laserstrahlung mittels eines gepulsten Lasers erzeugt wird.

In diesem Zusammenhang hat es sich bewährt, wenn der Impulslaser eine Pulsdauer im Bereich von 3 bis 400 ns, insbesondere 30 bis 300 ns, vorzugsweise 50 bis 240 ns, aufweist.

Gleichermaßen werden besonders gute Ergebnisse erhalten, wenn der Impulslaser eine Pulswiederholungsrate im Bereich von 2 bis 50.000 kHz, aufweist. Weitaus höhere Frequenzen im MHz-bereich, aber auch Continuous Wave können Verwendung finden.

Es zeigen die Figurendarstellungen gemäß
- Fig.1: eine Vorrichtung zur Durchführung des erfindungsgemäßen Verfahrens im Batch-Betrieb mittels einer Schwenktrommel;
- Fig. 2: eine Vorrichtung zur Durchführung des erfindungsgemäßen Verfahrens im Batch-Betrieb mittels eines Muldenbandes;
- Fig. 3: eine Vorrichtung zur Durchführung des erfindungsgemäßen Verfahrens im kontinuierlichen Betrieb;
- Fig. 4: eine elektronenmikroskopische Aufnahme eines Schraubenkopfes im unbehandelten Zustand;
- Fig. 5: die aus der Aufnahme gemäß Fig. 4 gewonnenen analytischen Daten der unbehandelten Oberfläche;

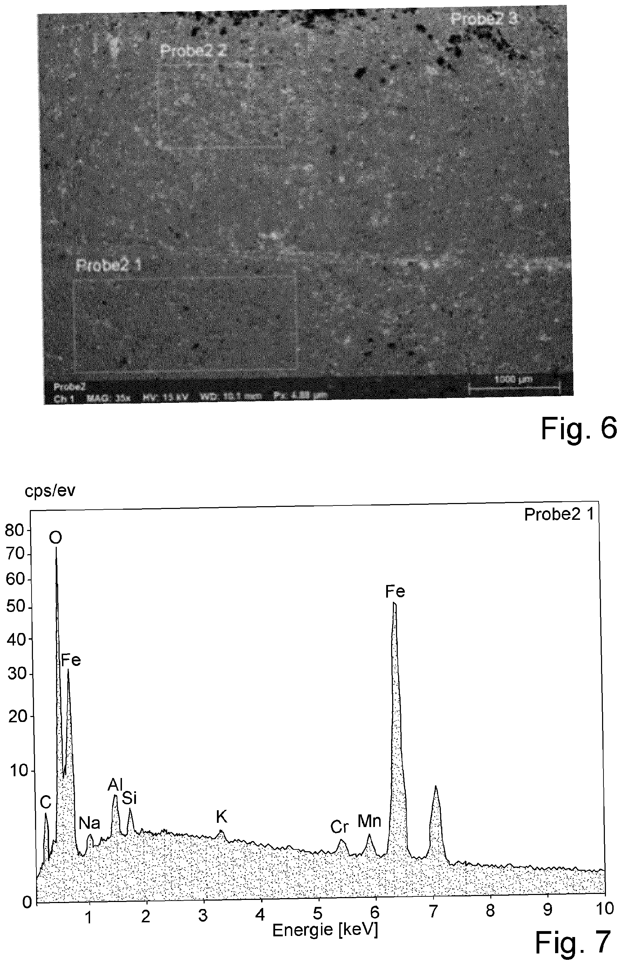

- Fig. 6: eine mikroskopische Aufnahme eines Schraubenkopfes nach konventioneller Vorbehandlung mittels heißalkalischem Entfetten und anschließendem Bestrahlen;
- Fig. 7: die zu Fig. 6 gehörige Elementaranalyse;

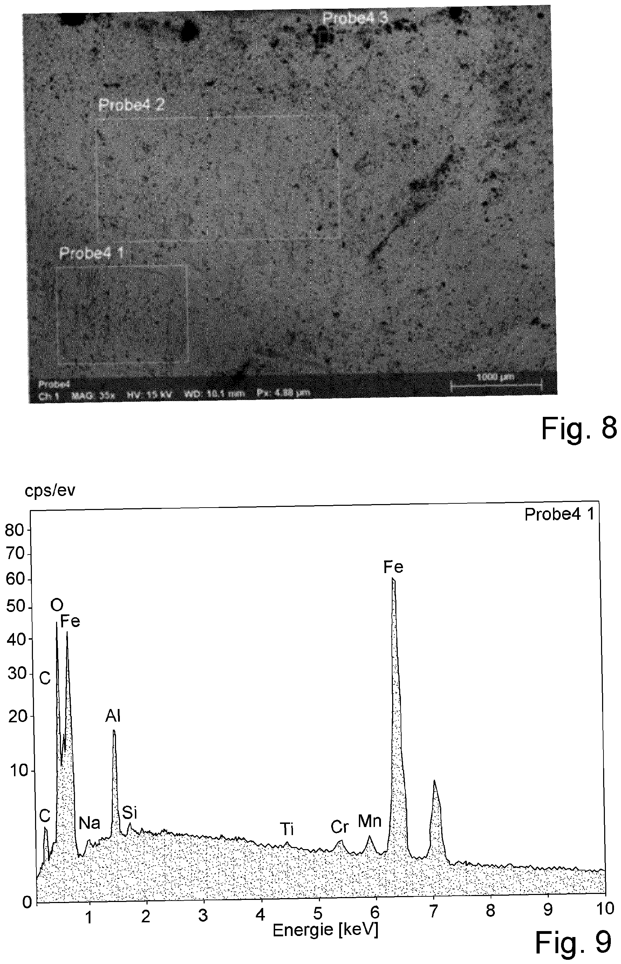

- Fig. 8: eine mikroskopische Aufnahme eines mittels des erfindungsgemäßen Verfahrens gereinigten Schraubenkopfes;
- Fig. 9: die zu Fig. 8 gehörige Elementaranalyse der Oberfläche des erfindungsgemäß behandelten Schraubenkopfes;
- Fig. 10: die Ergebnisse eines Lackadhäsionstests gemäß DIN EN ISO 10683 an konventionell behandelten Schrauben und
- Fig. 11: die Ergebnisse eines Lackadhäsionstests gemäß DIN EN ISO 10683 an erfindungsgemäß behandelten Schrauben.

Weiterer Gegenstand der vorliegenden Erfindung - gemäß einem **zweiten** Aspekt der vorliegenden Erfindung - ist eine Vorrichtung zur kollektiven Vorbehandlung bzw. Reinigung der Oberflächen einer Vielzahl von Objekten, umfassend eine Durchmischungseinrichtung zur Aufnahme und Durchmischung einer Vielzahl von Objekten, wobei die Vorrichtung mindestens eine Einrichtung, insbesondere mindestens einen Laser, zur Bestrahlung der Vielzahl von Objekten mit Laserstrahlung aufweist.

Bei der erfindungsgemäßen Vorrichtung kann es sich beispielsweise um eine Vorrichtung handeln, welche in weiten Teilen Strahl- oder Waschanlagen zur Behandlung von Massenschüttgut entspricht, wobei jedoch die Vorrichtungsteile, welche mit der Bevorratung, Leitung und Austragung des Strahl- oder Reinigungsmittels dienen entfallen und stattdessen eine Einrichtung zur Bestrahlung mit Laserstrahlung, insbesondere einen Laser, in die Vorrichtung integriert ist. Insbesondere weist die Einrichtung zur Bestrahlung mit Laserstrahlung Mittel zur Erzeugung und gegebenenfalls Ablenkung der Laserstrahlung auf. Vorzugsweise handelt es sich bei der Einrichtung zur Bestrahlung mit Laserstrahlung um einen Laser. Bei der erfindungsgemäßen Vorrichtung handelt es sich vorzugsweise um vollkommen neuartige Vorrichtungen, mit welcher flexibel eine Vielzahl unterschiedlicher laserbasierter Oberflächenbehandlungen von Massenschüttgut durchgeführt werden können.

Im Rahmen der vorliegenden Erfindung ist es üblicherweise vorgesehen, dass die Durchmischungseinrichtung ausgewählt ist aus Schnecken, insbesondere Förderschnecken, Raupenbändern, Muldenbändern, Schwenktrommeln oder Drehtrommeln.

Darüber hinaus kann es im Rahmen der vorliegenden Erfindung vorgesehen sein, dass die Vorrichtung eine oder mehrere Einrichtungen zur Bestrahlung mit Laserstrahlung, insbesondere Laser, aufweist. Gleichermaßen kann es vorgesehen sein, dass einzelne Einrichtungen zur Bestrahlung mit Laserstrahlung einen oder mehrere Laserköpfe aufweisen. Im Rahmen der vorliegenden Erfindung kann es somit vorgesehen sein, dass die Vorrichtung eine oder mehrere Einrichtungen zur Bestrahlung mit Laserstrahlung, insbesondere Laser, und/oder einen Laserkopf oder mehrere Laserköpfe aufweist. Besonders gute Ergebnisse werden im Rahmen der Erfindung erhalten, wenn die Vorrichtung mehrere Einrichtungen zur Bestrahlung mit Laserstrahlung, insbesondere Laser, und/oder oder mehrere Laserköpfe aufweist.

Weiterhin kann es im Rahmen der vorliegenden Erfindung vorgesehen sein, dass die Einrichtungen zur Bestrahlung mit Laserstrahlung, insbesondere Laser, und/oder oder die mehreren Laserköpfe in einer oder mehreren, insbesondere zueinander parallelen, Ebenen in der Vorrichtung angeordnet sind. In diesem Zusammenhang ist es möglich, dass die Einrichtungen zur Bestrahlung mit Laserstrahlung, insbesondere Laser, und/oder oder die mehreren Laserköpfe in einzelnen Ebenen parallel oder zueinander versetzt angeordnet sind.

Weiterhin können die Lasereinrichtungen bzw. Laserköpfe derart in der Vorrichtung angeordnet sein, dass die Vielzahl von Objekten aus parallelen oder unterschiedlichen Winkeln bestrahlt werden können.

Weiterhin kann es im Rahmen der vorliegenden Erfindung vorgesehen sein, dass die Einrichtungen zur Bestrahlung mit Laserstrahlung, insbesondere Laser, und/oder oder die mehrere Laserköpfe unterschiedliche Wellenlängen emittieren.

Darüber hinaus kann es im Rahmen der vorliegenden Erfindung vorgesehen sein, dass die Vorrichtung mindestens eine Einrichtung zur Entfernung von Gasen und/oder Partikeln aus der Gasphase aufweist. Insbesondere weist die Vorrichtung vorzugsweise eine Abzugseinheit auf.

Gleichermaßen kann es vorgesehen sein, dass die Vorrichtung mindestens eine Einrichtung zum Erzeugen einer speziellen Prozessatmosphäre, insbesondere einer Inertgasatmosphäre, beispielsweise einer Argon- und/oder Stickstoffatmosphäre, aufweisen und/oder dass die Vorrichtung mindestens eine Einrichtung zum Spülen des Gasraums, insbesondere des Ortes der Laserbehandlung, mit einem Prozessgas und/oder Druckluft aufweist.

Allgemein ist es im Rahmen der vorliegenden Erfindung vorgesehen, dass die Einrichtung Sensoren und eine Steuerungseinheit zur Überwachung und Steuerung der durchzuführenden Prozesse aufweist. Insbesondere können sowohl die optischen und auch akustischen Sensoren zum Einsatz kommen.

Darüber hinaus kann es weiterhin vorgesehen sein, dass die Vorrichtung im Rahmen der vorliegenden Erfindung Einrichtungen zur Durchführung weiterer Oberflächenbehandlungsverfahren aufweist. Insbesondere kann es sich bei den Einrichtungen zur Durchführung der weiteren Oberflächenbehandlungsverfahren um Einrichtungen zur Bestrahlung mit Plasma und/oder zur Bestrahlung mit Trockeneis handeln. Vorzugsweise ist die Vorrichtung dabei derart steuerbar, dass das erfindungsgemäße Verfahren sowie das weitere Verfahren zur Oberflächenbehandlung parallel oder sequenziell, insbesondere alternierend, durchgeführt werden können.

Besonders gute Ergebnisse werden im Rahmen der vorliegenden Erfindung erhalten, wenn die Lasereinrichtung ein Pulslaser ist.

Im Rahmen der vorliegenden Erfindung kann es vorgesehen, dass die Vorrichtung zur kontinuierlichen oder diskontinuierlichen Oberflächenbehandlung oder Vorbehandlung bzw. Reinigung der Vielzahl von metallischen oder metallhaltigen oder allgemein Objekten ausgebildet ist.

Eine kontinuierliche Vorbehandlung bzw. Reinigung kann dabei insbesondere durch die Verwendung von Förderschnecken und Raupenbändern erfolgen, während bei diskontinuierlichen Vorbehandlungen diese Reinigung üblicherweise im Batch-Betrieb erfolgt, beispielsweise durch die Verwendung von Muldenbändern, Drehtrommeln und Schwenktrommeln.

Für weitergehende Einzelheiten zu diesem Erfindungsaspekt kann auf die obigen Ausführungen zu dem erfindungsgemäßen Verfahren verwiesen werden, welche in Bezug auf die erfindungsgemäße Vorrichtung entsprechend gelten.

Wiederum weiterer Gegenstand der vorliegenden Erfindung gemäß einem **dritten** Aspekt der vorliegenden Erfindung ist ein Verfahren zur Beschichtung einer Vielzahl von Objekten, wobei zunächst die Oberflächen der Vielzahl von Objekten kollektiv gereinigt wird, wie zuvor beschrieben oder in der zuvor beschriebenen Vorrichtung, und anschließend die Vielzahl von Objekten beschichtet wird.

Gemäß diesem Aspekt der vorliegenden Erfindung wird das Verfahren zur Oberflächenbehandlung als Reinigungsverfahren durchgeführt.

Im Rahmen der vorliegenden Erfindung kann es weiterhin vorgesehen sein, dass die Objekte mit einer dekorativen und/oder funktionalen Beschichtung beschichtet werden.

Gemäß diesem Erfindungsaspekt ist es besonders bevorzugt, wenn es sich bei den Objekten um metallische oder metallhaltige Objekte handelt.

Besonders gute Ergebnisse werden dabei erhalten, wenn es bei der aufzutragenden Beschichtung um eine funktionelle Beschichtung in Form einer Korrosionsschutzbeschichtung. Vorzugsweise werden im Rahmen der vorliegenden Erfindung zinkhaltige Korrosionsschutzbeschichtungen aufgebracht. In diesem Zusammenhang hat es sich bewährt, wenn zinkhaltige Korrosionsschutzbeschichtung Zink oder Zinklegierungen, insbesondere ausgewählt aus Zink-Magnesiumlegierungen, Zink-Aluminiumlegierungen, Zink-Magnesium-Aluminiumlegierungen oder Zink-Nickel-Legierungen, aufweist.

Vorzugsweise ist die zinkhaltige Korrosionsschutzbeschichtungen eine Zinklamellenbeschichtung oder eine galvanische Zinkbeschichtung.

Für weitergehende Einzelheiten zu diesem Erfindungsaspekt kann auf die obigen Ausführungen zu den weiteren Erfindungsaspekten verwiesen werden, welche in Bezug auf das erfindungsgemäße Verfahren entsprechend gelten.

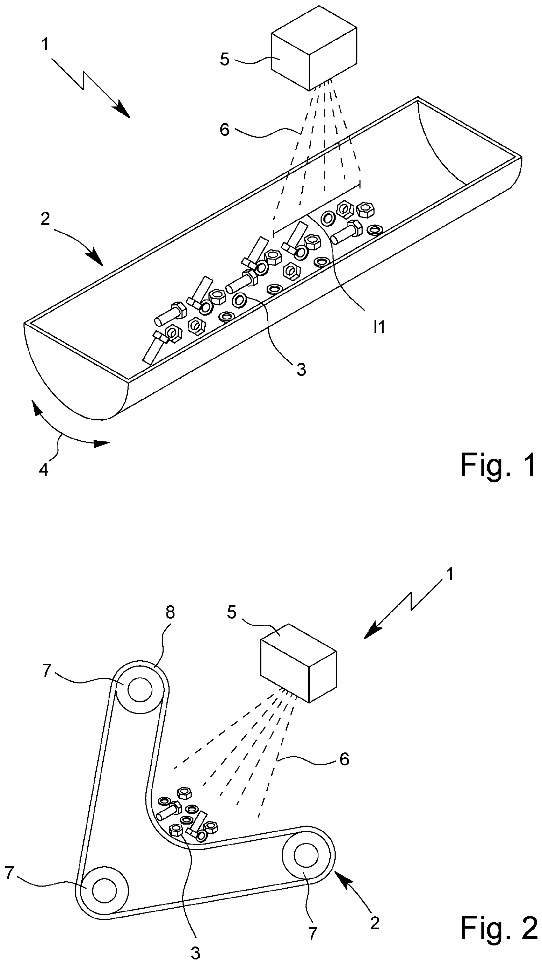

Der Gegenstand der vorliegenden Erfindung wird nachfolgend in nicht beschränkender Weise anhand der Figurendarstellung sowie der Ausführungsbeispiele erläutert:
Es zeigt Figur 1 eine erfindungsgemäße Vorrichtung 1 zur Durchführung des erfindungsgemäßen Verfahrens beispielhaft in Form eines Reinigungsverfahrens. Die Vorrichtung 1 weist eine Durchmischungseinrichtung 2 auf, welche in der Figurendarstellung als Schwenktrommel ausgeführt ist. Die in Fig. 1 dargestellte Ausführungsform der erfindungsgemäßen Vorrichtung eignet sich somit zur Durchführung des Verfahrens nach der Erfindung im Batch-Betrieb.

Zur Durchführung des Verfahrens wird die Durchmischungseinrichtung 2 mit einer Vielzahl von metallischen Objekten 3, insbesondere Kleinteilen, befüllt, wobei die Objekte 3 vorzugsweise in loser Schüttung in der Durchmischungseinrichtung 2 angeordnet sind, bevorzugt in mehreren Lagen. Auf eine Darstellung einer größeren Anzahl an Objekten 3 wurde aus Gründen der Übersichtlichkeit verzichtet.

Um eine Durchmischung der Objekte 3 während des Vorbehandlungs- bzw. Reinigungsverfahrens zu erzielen wird die Durchmischungseinrichtung 2 in Form der Schwenktrommel um eine Schwenkachse in Bewegungsrichtungen 4 geschwenkt. Hierdurch wird eine konstante Durchmischung der Objekte 3 erreicht. Zur Vorbehandlung bzw. Reinigung der metallischen Objekte 3 werden mittels einer Einrichtung zur Bestrahlung mit Laserstrahlung 5 Laserstrahlen 6 erzeugt, welche zumindest bereichsweise insbesondere über eine Länge L1 über die Schüttung der Objekte 3 geführt wird. Durch die Durchmischung der Objekte 3, insbesondere durch Schwenken der Durchmischungseinrichtung 2, wird erreicht, dass alle Oberflächen der Objekte 3 von den Laserstrahlen 6 erreicht werden können. Überraschenderweise hat es sich herausgestellt, dass nicht alle Objekte 3 stets genau im Fokus der Laserstrahlen 3 befindlich sein müssen, vielmehr werden auch angrenzende Bereiche gereinigt.

Die Vorrichtung 1 kann optional mehrere Laser 5 aufweisen, so dass größere Bereiche der Durchmischungseinrichtung 2 gleichzeitig von den Laserstrahlen 6 erfasst werden können. Bei der Einrichtung zur Bestrahlung mit Laserstrahlung 5 handelt es sich vorzugsweise um einen Impulslaser mit einer Leistung im Bereich von 600 bis 5.000 W. Der Fokus der Laserstrahlung ist variierbar. Die Pulswiederholungsdauer liegt beispielsweise bei 5 bis 50 KHz.

Die erfindungsgemäße Vorrichtung kann darüber hinaus auch weitere Einrichtungen aufweisen, wie beispielsweise Transporteinrichtungen zur Zuführung der Objekte 3 in die Vorrichtung 1 und zu deren weiteren Transport in der Vorrichtung. Vorzugsweise handelt es sich bei der erfindungsgemäßen Vorrichtung 1 um eine Vorrichtung, die zur Strahlreinigung von Massenschüttgut verwendet wird, wobei lediglich Einrichtungen, welche den Transport sowie die Verteilung von Strahlmittel in der Durchmischungseinrichtung 2 betreffen durch die Lasereinrichtung 5 ersetzt werden.

Es zeigt Figur 2 eine weitere Ausführungsform der erfindungsgemäßen Vorrichtung zur Durchführung des Verfahrens nach der Erfindung zur diskontinuierlichen Durchführung des erfindungsgemäßen Verfahrens, insbesondere zur Durchführung des erfindungsgemäßen Verfahrens im Batch-Betrieb. Die Durchmischungseinrichtung 2 ist hierbei in Form eines Muldenbandes ausgeführt, bei welchen ein Band 8 über verschiedene Rollen 7 geführt und durch diese angetrieben wird. Das Band weist an einer Stelle eine Mulde auf, in welche sich die Vielzahl metallischer Objekte 3 befindet. Wie schon zuvor im Zusammenhang mit Figur 1 beschrieben weist die Vorrichtung 1 weiterhin eine Lasereinrichtung 5 auf, welche Laserstrahlen 6 auf die Oberfläche der metallischen Teile 3 eingestrahlt wird.

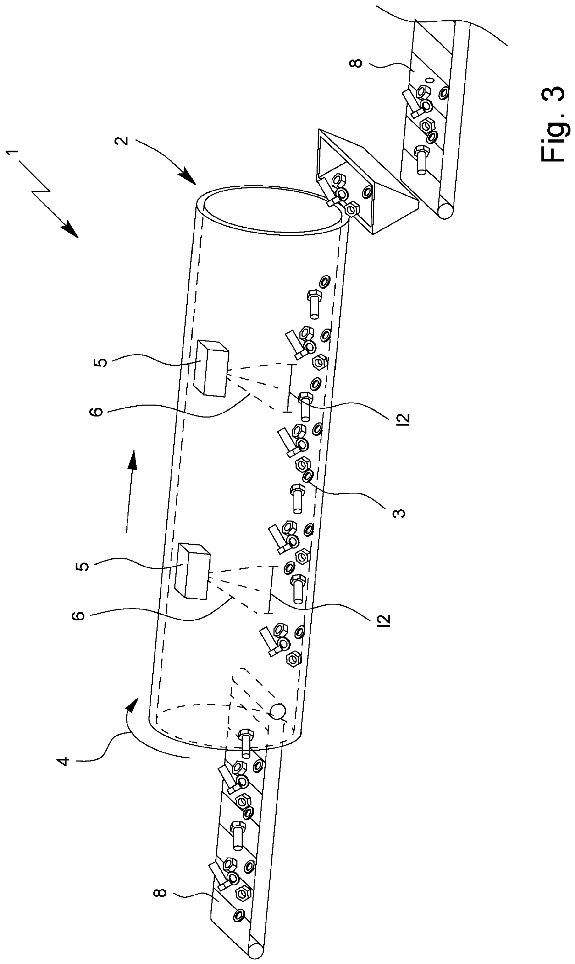

Figur 3 zeigt eine erfindungsgemäße Vorrichtung 1 zur Durchführung des Verfahrens nach der Erfindung. Die Vorrichtung 1 weist eine Durchmischungseinrichtung 2 auf, hier dargestellt in Form einer Drehtrommel, welche in eine Richtung 4 drehbar ist. Zur Durchführung des erfindungsgemäßen Verfahrens werden metallische Objekte 3 in loser Schüttung über Bänder 8 in die Durchmischungseinrichtung 2 geführt, welche sich in Richtung 4 dreht, und durch diese weiter transportiert. Während die metallischen Objekte 3 durch die Durchmischungseinrichtung 2 geführt werden, werden die Teile mit Laserstrahlen 6 aus mehreren Einrichtung zur Bestrahlung mit Laserstrahlung 5, insbesondere Lasern, bestrahlt, wobei jede Lasereinrichtung 5 jeweils nur eine bestimmte Länge L2 innerhalb der Durchmischungseinrichtungen 2 bestrahlt.

Das erfindungsgemäße Verfahren ist auf Vorrichtungen 1 durchführbar, welche zur Vorbehandlung bzw. Reinigung von Massenschüttgut mittels Strahlmitteln verwendet werden, wobei lediglich Einrichtungen, welche der Zuführung von Strahlmitteln, der Behandlung des Schüttguts mit dem Strahlmittel und der Abführung verbrauchten Strahlmittels dienen, durch eine oder mehrere Einrichtung zur Bestrahlung mit Laserstrahlung 5 in der Vorrichtung 1 ersetzt werden.

### Ausführungsbeispiele

Zur Demonstration des erfindungsgemäßen Verfahrens wird eine Vorrichtung, welche Schüttgut fördern und umwälzen kann und mit eine Drehtrommel aufweist, mit einem Pulslaser ausgestattet. Der gepulste Faserlaser mit einer mittleren Leistung von 750 W wird mit einem Abstand von ca. 10 cm in der Trommel platziert. Der Laser wird so eingestellt, dass scannend ein circa 20 cm langer Bereich gereinigt werden kann. Der Laserspot kann dabei variiert werden. Die Pulsdauer beträgt 150 ns. Die Trommel wird mit 20 kg Schrauben gefüllt und in Rotation gebracht, um eine Bewegung und damit gleichmäßige Reinigung ermöglichen zu können. Parallel wird der Laser mit den vorgenannten Parametern betrieben. Sehr gute Vorbehandlungs- bzw. Reinigungsergebnisse können bei 15-minütiger Durchführung des Verfahrens erzielt werden. Die gereinigten Oberflächen werden mit Hilfe von EDX analysiert.

Es zeigen die Figuren 2 und 3 eine EDX-Analyse eines Schraubenkopfes im verzunderten und geölten Zustand.

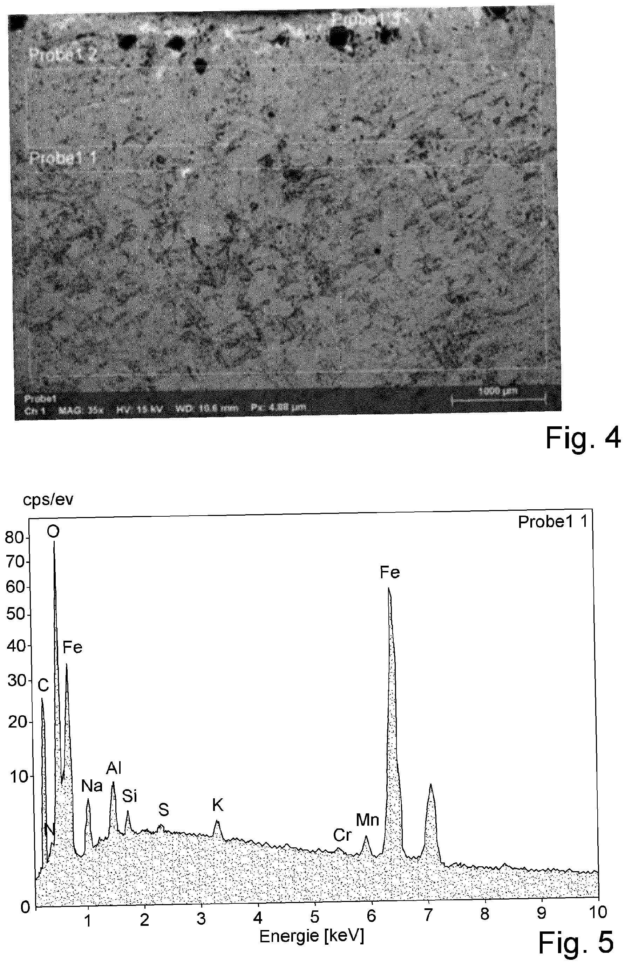

Figuren 3 und 4 zeigen eine EDX-Analyse eines Schraubenkopfes nach konventioneller Behandlung, d.h. heißalkalischer Entfettung und Strahlen. Es zeigt sich, dass im Vergleich zur geölten und verzunderten Schraube die Menge an Alkalimetallen, Schwefel und Kohlenstoff auf der Oberfläche deutlich verringert werden konnte. Auch zeigt die mikroskopische Aufnahme der Oberfläche ein deutlich kompakteres Bild ohne Anhaftung.

Die Figuren 3 und 4 zeigen wie eine EDX-Analyse eines Schraubenkopfes nach der erfindungsgemäßen Vorbehandlung bzw. Reinigung. Auch hier zeigt sich, dass im Vergleich zur unbehandelten Schraube die Anhaftung von Alkalimetallen und Kohlenstoff deutlich reduziert werden konnte. Gleichfalls ist auch die Anhaftung von sauerstoffhaltigen Verbindungen auf der Oberfläche deutlich reduziert.

Es zeigt sich somit, dass im Rahmen der erfindungsgemäßen Vorbehandlung zur Reinigung ein ähnliches Oberflächenprofil geschaffen wird, wie im Rahmen der Heißentfettung und des Strahlens.

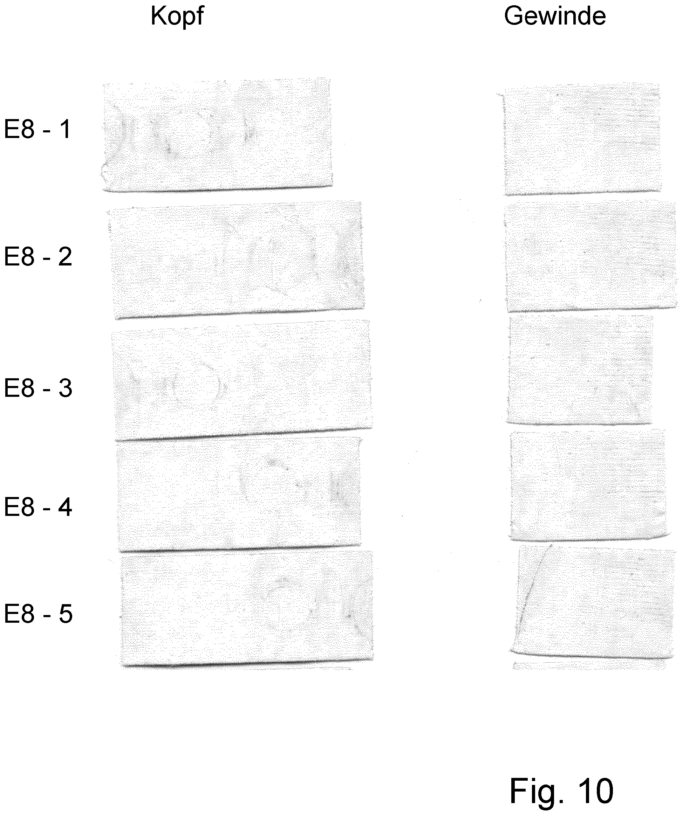

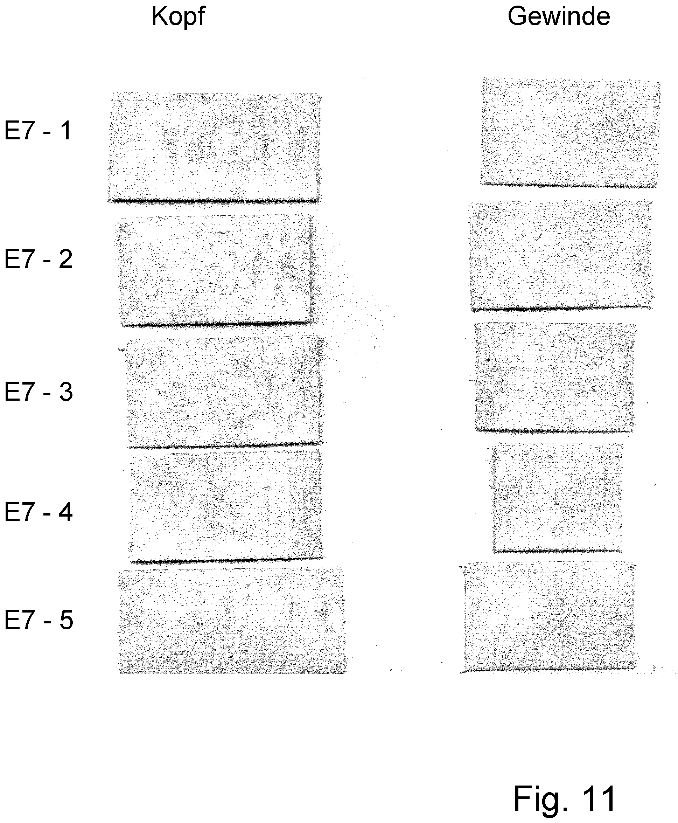

Ein Lackadhäsionstest wird gemäß DIN EN ISO 10683 durchgeführt. Hierzu werden die gereinigten Schrauben mit einer Zinklamellenbeschichtung beschichtet und anschließend die Haftprüfung gemäß DIN EN ISO 10683 mittels Klebebändern durchgeführt. In den Figuren 10 und 11 sind die jeweiligen Ergebnisse gegeneinander dargestellt. Es zeigt Figur 10 die Haftprüfung auf einer Schraube, welche zunächst heißalkalisch entfettet und anschließend bestrahlt wurde. Die Figuren 12 und 13 zeigen die entsprechenden Tapeabrisse nach vorangehender Laserreinigung.

Es zeigt sich, dass in beiden Fällen der Abriss der Beschichtungen vergleichbar ist, d.h. das vergleichbare Adhäsionen auf den Schrauben erzielt wird.

Dies zeigt sich auch im ergänzenden Salzsprühtest, welchem auch die mit den erfindungsgemäßen Verfahren gereinigten Schrauben gute Korrosionsschutzwerte von über 1.000 Stunden im Salzsprühnebeltest gemäß DIN EN ISO 9227 erreichen. Das erfindungsgemäße Verfahren ermöglicht somit eine deutlich vereinfachte, wirtschaftlichere und nachhaltigere Möglichkeit der Vorbehandlung bzw. Reinigung von Massenschüttgut als die üblichen Verfahren im Stand der Technik. Insbesondere kann auf eine zweistufige Verfahrensführung, aus Entfetten und anschließendem Bestrahlen verzichtet werden.

### Bezugszeichenliste:

| | | | |
|---|---|---|---|
| 1 | Vorrichtung | 5 | Einrichtung zur Bestrahlung |
| 2 | Durchmischungseinrichtung | | mit Laserstrahlung |
| 3 | metallische oder | 6 | Laserstrahlung |
| | metallhaltige Objekte | 7 | Rolle |
| 4 | Drehrichtung | 8 | Band |

## Patentansprüche

1. Verfahren zur kollektiven Behandlung der Oberflächen einer Vielzahl von Objekten,
**dadurch gekennzeichnet,**
**dass** die Behandlung der Oberflächen durch Bestrahlung mit Laserstrahlung erfolgt.

2. Verfahren nach Anspruch 1, **dadurch gekennzeichnet, dass** die Objekte in Schüttung vorliegen, insbesondere in Form einer mehrlagigen Schüttung.

3. Verfahren nach Anspruch 1 oder 2, **dadurch gekennzeichnet, dass** die Objekte als Schüttgut, insbesondere Massenschüttgut, vorliegen.

4. Verfahren nach einem der vorangehenden Ansprüche, **dadurch gekennzeichnet, dass** die Objekte ein Material ausgewählt aus Holz, Kunststoff, Keramik, Metall und deren Mischungen aufweisen oder hieraus bestehen.

5. Verfahren nach einem der vorangehenden Ansprüche, **dadurch gekennzeichnet, dass** die Objekte ausgewählt sind aus Kleinteilen, insbesondere Schrauben, Muttern, Bolzen und Nieten, Stanzteilen, insbesondere Stanz-Biegeteilen, Gussteilen und Pressteilen.

6. Verfahren nach einem der vorangehenden Ansprüche, **dadurch gekennzeichnet, dass** Lage der einzelnen Objekte während der Reinigung zueinander verändert wird und/oder dass die Objekte während der Reinigung durchmischt werden.

7. Verfahren nach Anspruch 6, **dadurch gekennzeichnet, dass** die Lage der Objekte kontinuierlich und/oder andauernd verändert wird und/oder dass die Objekte kontinuierlich und/oder andauernd durchmischt werden.

8. Verfahren nach einem der vorangehenden Ansprüche, **dadurch gekennzeichnet, dass** die Reinigung kontinuierlich oder diskontinuierlich, insbesondere im Batchbetrieb, durchgeführt wird.

9. Verfahren nach einem der vorangehenden Ansprüche, **dadurch gekennzeichnet, dass** die Bestrahlung mittels Laserstrahlung zumindest bereichsweise, vorzugsweise bereichsweise, erfolgt.

10. Verfahren nach einem der vorangehenden Ansprüche, **dadurch gekennzeichnet, dass** die Bestrahlung mittels Laserstrahlung kontinuierlich oder diskontinuierlich, vorzugsweise diskontinuierlich, erfolgt.

11. Verfahren nach einem der vorangehenden Ansprüche, **dadurch gekennzeichnet, dass** für die Bestrahlung mit Laserstrahlung ein Laser oder mehrere Laser und/oder ein Laserkopf oder mehrere Laserköpfe verwendet werden.

12. Verfahren nach Anspruch 11, **dadurch gekennzeichnet, dass** die Laser und/oder Laserköpfe in einer oder mehreren, insbesondere zueinander parallelen, Ebenen in einer Vorrichtung angeordnet sind, insbesondere wobei die Laser und/oder Laserköpfe in den einzelnen Ebenen parallel und/oder zueinander versetzt, insbesondere gestaffelt, angeordnet sind, und/oder dass die Bestrahlung der Objekte mit Laserstrahlung mit den mehreren Lasern und/oder mehreren Laserköpfen parallel oder aus unterschiedlichen Winkeln erfolgt.

13. Verfahren nach einem der vorangehenden Ansprüche, **dadurch gekennzeichnet, dass**
(a) in einem ersten Verfahrensschritt (a) eine Vielzahl von Objekten in eine Durchmischungseinrichtung eingebracht wird und
(b) in einem auf den ersten Verfahrensschritt folgenden zweiten Verfahren Schritt die Vielzahl Objekte durchmischt und mit Laserstrahlung bestrahlt wird.

14. Verfahren nach einem der vorangehenden Ansprüche, **dadurch gekennzeichnet, dass** das Verfahren in einer Prozessatmosphäre durchgeführt wird und/oder
dass das Verfahren, insbesondere die Laserbehandlung sensorisch überwacht und gesteuert wird und/oder
dass das Verfahren mit weiteren Verfahren zur Oberflächenbehandlung kombiniert wird, insbesondere einer Plasmabestrahlung oder einer Trockeneisbestrahlung.

15. Vorrichtung (1) zur kollektiven Reinigung der Oberflächen einer Vielzahl von Objekten, umfassend eine Durchmischungseinrichtung (2) zur Aufnahme und Durchmischung der einer Vielzahl von Objekten (3),
**dadurch gekennzeichnet,**
**dass** die Vorrichtung (1) mindestens eine Lasereinrichtung (5) zur Bestrahlung der Vielzahl von Objekten (3) mit Laserstrahlung aufweist.

16. Vorrichtung (1) nach Anspruch 15, **dadurch gekennzeichnet, dass** die Durchmischungseinrichtung (2) ausgewählt ist aus Schnecken, insbesondere Förderschnecken, Raupenbändern, Muldenbändern, Schwenktrommeln oder Drehtrommeln.

17. Vorrichtung (1) nach Anspruch 15 oder 16, **dadurch gekennzeichnet, dass** die Vorrichtung eine oder mehrere Einrichtungen zur Bestrahlung mit Laserstrahlung (5), insbesondere Laser, aufweist, insbesondere wobei einzelne Einrichtungen zur Bestrahlung mit Laserstrahlung einen Laserkopf oder mehrere Laserköpfe aufweisen.

18. Verfahren nach Anspruch 17, **dadurch gekennzeichnet, dass** die Einrichtungen zur Bestrahlung mit Laserstrahlung (5), insbesondere Laser, und/oder oder die mehreren Laserköpfe in einer oder mehreren, insbesondere zueinander parallelen, Ebenen in der Vorrichtung (1) angeordnet sind, insbesondere wobei die Einrichtungen zur Bestrahlung mit Laserstrahlung (5), insbesondere Laser, und/oder oder die mehreren Laserköpfe in einzelnen Ebenen parallel oder zueinander versetzt angeordnet sind.

19. Verfahren zur Beschichtung einer Vielzahl von Objekten ,
**dadurch gekennzeichnet,**
**dass** zunächst die Oberflächen der Vielzahl von Objekten kollektiv gereinigt werden nach einem Verfahren nach einem der Ansprüche 1 bis 14, insbesondere in einer Vorrichtung nach einem der Ansprüche 15 bis 18, und anschließend die Vielzahl von gereinigten Objekten beschichtet wird.

20. Verfahren nach Anspruch 19, **dadurch gekennzeichnet, dass** die Objekte mit einer dekorativen und/oder funktionalen Beschichtung beschichtet werden.
